(19) Europäisches Patentamt
European Patent Office
Office européen des brevets

(11) **EP 3 648 022 A1**

(12) **EUROPÄISCHE PATENTANMELDUNG**

(43) Veröffentlichungstag:
06.05.2020 Patentblatt 2020/19

(51) Int Cl.:
*G06Q 10/06* *(2012.01)*

(21) Anmeldenummer: 18204240.8

(22) Anmeldetag: 05.11.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Göhring, Christian**
**1060 Wien (AT)**
• **Schall, Daniel**
**1220 Wien (AT)**

(74) Vertreter: **Maier, Daniel Oliver**
**Siemens AG**
**Postfach 22 16 34**
**80506 München (DE)**

(54) **VERFAHREN UND VORRICHTUNG ZUR ERMITTLUNG EINER TECHNISCHEN EIGENSCHAFT EINES PROGRAMMCODES ZUR ANSTEUERUNG EINES ELEKTRONISCHEN GERÄTS**

(57) Verfahren zur Ermittlung einer technischen Eigenschaft eines Programmcodes (10) zur Ansteuerung eines elektronischen Geräts, wobei der Programmcode (10) bereitgestellt und in einen Programmteil (11-13) unterteilt und eine Analyse-Kategorie (21, 22) festgelegt wird. Für den Programmteil (11-13) wird mittels einer Metrik ein Parameter für die Analyse-Kategorie (21, 22) abgeleitet. Ein Such-Modell wird hinsichtlich der Analyse-Kategorie (21, 22) und des Parameters für ein, auf dem Prinzip des maschinellen Lernens basierendes Such-Verfahren erzeugt und trainiert, wobei das Such-Modell Meinungsanalyse-Daten und/oder Marktplatzanalyse-Daten und/oder API-Analyse-Daten aufweist. Für den Programmteil (11-13) wird eine Suche mithilfe des Such-Modells und bereitgestellter Eingabe-Daten (41-44) ausgeführt und aus dem Ergebnis der Suche eine Eigenschafts-Information (55-57) abgeleitet, aus welcher die technische Eigenschaft in Form von Bewertungs-Daten (61-63) des Programmteils (11-13) des Programmcodes (10) ermittelt wird.

FIG 1

**Beschreibung**

Die Erfindung betrifft ein Verfahren und eine Vorrichtung zur Ermittlung einer technischen Eigenschaft eines Programmcodes zur Ansteuerung eines elektronischen Geräts.

Außerdem betrifft die Erfindung ein Computerprogramm und ein Speichermedium.

Bei der Entwicklung von Anwendungsprogrammen zur Ansteuerung von elektronischen Geräten kann es zu Problemen während der Programmierung beziehungsweise Codierung hinsichtlich technischer Eigenschaften, wie beispielsweise Ausführungsgeschwindigkeit, Stabilität des Programmcodes, Effizienz der Speichernutzung, der optimalen Konfiguration von Parametern im Programmcode oder auch der Interoperabilität zwischen anderen Programmcodes kommen.

Ferner kann es bei der Entwicklung von Anwendungsprogrammen zur Ansteuerung von elektronischen Geräten in Kategorien wie beispielsweise Fehlerbehandlung, die Konfiguration von Anwendungsprogrammen aus Software-Bibliotheken, die Konfiguration von Geräten oder die Verbesserung der Systemleistung, der Leitung elektronischen Geräts, der Benutzerfreundlichkeit oder der Qualität der Dokumentation des Programmcodes zu entsprechenden Fragestellungen kommen, deren Beantwortung teilweise sehr großen Aufwand impliziert.

Für die Bestimmung der Qualität eines Programmcodes oder Anwendungsprogramms können die technischen Eigenschaften in ausgewählten Kategorien herangezogen werden.

Es ist Aufgabe der Erfindung, für Programmcodes oder Anwendungsprogrammen zur Ansteuerung eines elektronischen Geräts eine technische Eigenschaft zu ermitteln und dadurch die Qualität zu verbessern.

Die Aufgabe wird durch ein Verfahren eingangs genannter Art gelöst, indem

der Programmcode bereitgestellt und in zumindest einen Programmteil unterteilt und zumindest eine Analyse-Kategorie festgelegt wird,

und für den zumindest einen Programmteil mittels einer Metrik zumindest ein Parameter für die zumindest eine Analyse-Kategorie abgeleitet wird,

und ein Such-Modell hinsichtlich der zumindest einen Analyse-Kategorie und des zumindest einen Parameters für ein, auf dem Prinzip des maschinellen Lernens basierendes Such-Verfahren erzeugt und trainiert wird, wobei das Such-Modell Meinungsanalyse-Daten und/oder Marktplatzanalyse-Daten und/oder API-Analyse-Daten aufweist,

und für den zumindest einen Programmteil eine Suche mithilfe des Such-Modells und bereitgestellter Eingabe-Daten ausgeführt wird und aus dem Ergebnis der Suche zumindest eine Eigenschafts-Information abgeleitet wird, aus welcher die technische Eigenschaft in Form von Bewertungs-Daten des zumindest einen Programmteils des Programmcodes ermittelt wird.

Dadurch wird erreicht, dass eine technische Eigenschaft oder ein physikalischer Parameter eines Programmcodes auf eine einfache Weise automatisch bestimmt werden kann, ohne dass der Programmcode ausgeführt, beziehungsweise das elektronische Gerät angesteuert werden muss. Die technische Eigenschaft umfasst nicht nur eine Eigenschaft oder einen physikalischen Parameter des Programmcodes für sich, sondern eine gemeinsame Eigenschaft oder einen gemeinsamen physikalischen Parameter des Programmcodes in Verbindung mit dem elektronischen Gerät.

Die technische Eigenschaft wird ermittelt, indem für das entsprechende Anwendungsprogramm oder den Programmcode mittels Vergleich beispielsweise von verschiedenen Datenquellen Qualitätshinweise, wie beispielsweise Meinungen von Entwicklern bezüglich der Entwicklung und der Anwendung, aber auch Endnutzer-Informationen von einem Marktplatz für Anwendungsprogramme ("App Store"), sowie Erfahrungen bei der Verwendung von Schnittstellen (APIs) quantitativ erfasst und analysiert werden, ob die ermittelte technische Eigenschaft hinreichend ist, um die Aufgabe des Anwendungsprogramms zu erfüllen.

Mit anderen Worten wird durch das erfindungsgemäße Verfahren auf eine automatisierte Weise ein messbarer Parameter bestimmt, mit welchem in weiterer Folge die Qualität des Anwendungsprogramms verbessert werden kann.

Diese technische Eigenschaft kann folglich dazu genützt werden, das Anwendungsprogramm in weiterer Folge zu modifizieren oder zu verbessern, aber auch um Fehler zu beheben oder zu vermeiden. Ebenso kann die Qualität der Dokumentation angehoben werden.

Bei der Entwicklung von Anwendungsprogrammen zur Ansteuerung von elektronischen Geräten wird häufig auf bereits bestehende Software-Bibliotheken, beispielsweise mit Geräte-Treibern, Codesequenzen für Datenerfassung, Datenanalyse und Datenauswertung in Matlab® beziehungsweise Simulink® oder statistische Auswertungs-Codesequenzen in der Programmiersprache R zurückgegriffen, um die Entwicklungszeit der Anwendungsprogramme kurz und entsprechend die Entwicklungskosten gering zu halten.

Derartige Bibliotheken können allgemeine Programmcodes enthalten, welche im Rahmen einer gemeinschaftlichen Entwicklung in einem Software-Ökosystem entstanden sind, wie beispielsweise Open-Source-Software oder auch bereits kompilierte Programmcodes, wobei ein Programmcode mehrere Codezeilen umfasst.

Ein Software-Ökosystem beschreibt das Zusammenspiel zwischen Organisationen und Unternehmen auf einem geteilten Markt für Softwareentwicklung und Services. Hierbei stehen die Beteiligten in ihren Netzwerken und den dadurch gebildeten sozialen oder wirtschaftlichen Ökosystemen mit ihrem Interesse an Software im Mittelpunkt. Oft bildet eine gemeinschaftliche, technologische Plattform (z. B. Siemens MindSphere) oder ein gemeinsamer Markt die Basis für geschäftliche Aktivitäten und eine Zusammenarbeit. Das Ökosystem ist durch den Austausch von Informationen, Ressourcen und Artefakten gekennzeichnet.

Solche Anwendungsprogramme beziehungsweise Programmcodes bezogen aus einem Software-Ökosystem können in unterschiedlichen Marktplätzen ("Appstores") von unterschiedlichen Herstellern angeboten werden.

Durch Nutzung von Informationen hinsichtlich technischer Eigenschaften beispielsweise von Gerätetreibern aus derartigen Bibliotheken bei der Entwicklung muss eine Programmiererin keine komplizierten und zumeist Hardware-nahen Detail-Kenntnisse über die Ansteuerung des Geräts besitzen. Somit kann eine effiziente Anwendungs-Programmierung auch durch weniger spezialisierte Personen erfolgen.

Das erfindungsgemäße Verfahren zeichnet sich außerdem dadurch aus, dass maschinelles Lernen zum Auffinden der Eigenschafts-Information angewendet wird und dadurch auf effiziente Weise relevante Informationen hinsichtlich der technischen Eigenschaft ermittelt werden.

Maschinelles Lernen ist ein Oberbegriff für die "künstliche" Generierung von Wissen aus Erfahrung: Ein künstliches System lernt aus Beispielen und kann diese nach Beendigung der Lernphase verallgemeinern. Das heißt, es werden nicht einfach die Beispiele auswendig gelernt, sondern es "erkennt" Muster und Gesetzmäßigkeiten in den Lerndaten. So kann das System auch unbekannte Daten beurteilen (Lerntransfer) oder aber am Lernen unbekannter Daten scheitern (Überanpassung).

Maschinelles Lernen ist eng verwandt mit "Knowledge Discovery in Databases" und "Data-Mining", bei dem es jedoch vorwiegend um das Finden von neuen Mustern und Gesetzmäßigkeiten geht. Viele Algorithmen können für beide Zwecke verwendet werden. Außerdem können Methoden der "Knowledge Discovery in Databases" genutzt werden, um Lerndaten für "maschinelles Lernen" zu produzieren oder vorab zu verarbeiten, und Algorithmen aus dem maschinellen Lernen finden beispielsweise beim Data-Mining Anwendung.

Beim maschinellen Lernen spielen Art und Mächtigkeit der Wissensrepräsentation eine wichtige Rolle. Man unterscheidet zwischen symbolischen Systemen, in denen das Wissen - sowohl die Beispiele als auch die induzierten Regeln - explizit repräsentiert ist, und subsymbolischen Systemen wie neuronalen Netzen, denen zwar ein berechenbares Verhalten "antrainiert" wird, die jedoch keinen Einblick in die erlernten Lösungswege erlauben; hier ist Wissen implizit repräsentiert.

Die praktische Umsetzung geschieht mittels Algorithmen, welche sich grob einteilen lassen in:

- Überwachtes Lernen ("supervised learning"): Ein Algorithmus lernt eine Funktion aus gegebenen Paaren von Ein- und Ausgaben und während des Lernens stellt ein "Lehrer" den korrekten Funktionswert zu einer Eingabe bereit. Ziel beim überwachten Lernen ist, dass dem Netz nach mehreren Rechengängen mit unterschiedlichen Ein- und Ausgaben die Fähigkeit antrainiert wird, Assoziationen herzustellen. Ein Teilgebiet des überwachten Lernens ist die automatische Klassifizierung.

- Unüberwachtes Lernen ("unsupervised learning"): Ein Algorithmus erzeugt für eine gegebene Menge von Eingaben ein Modell, das die Eingaben beschreibt und Vorhersagen ermöglicht. Dabei gibt es Clustering-Verfahren, die die Daten in mehrere Kategorien einteilen, die sich durch charakteristische Muster voneinander unterscheiden. Das Netz erstellt somit selbständig Klassifikatoren, nach denen es die Eingabemuster einteilt.

Des Weiteren unterscheidet man zwischen Batch-Lernen, bei dem alle Eingabe/Ausgabe-Paare gleichzeitig vorhanden sind, und kontinuierlichem (sequentiellem) Lernen, bei dem sich die Struktur des Netzes zeitlich versetzt entwickelt.

Außerdem unterscheidet man zwischen Off-line-Lernen, bei dem alle Daten gespeichert sind und somit wiederholbar zugreifbar sind, und On-line-Lernen, bei dem die Daten nach einmaligem Ausführen und Anpassen der Gewichte verloren gehen. Batch Training ist immer off-line, On-line-Training ist immer inkrementell. Inkrementelles Lernen kann jedoch on-line oder off-line erfolgen.

Zu den überwachten Lernverfahren zählen alle Verfahren zur Regression oder Klassifikation, beispielsweise mit Algorithmen wir k-nearest-Neighbour, Random Forest, künstliche neuronale Netze, Support Vector Machines oder auch Verfahren der Dimensionsreduktion wie die lineare Diskriminanzanalyse.

In einer Weiterbildung der Erfindung basiert das Such-Modell auf einem Random-Forest-Modell. Verwandte Verfahren wie z.B. Support Vector Machines, künstliche neuronale Netze können analog für die Erstellung des Such-Modells herangezogen werden.

Ein Random Forest ist ein Klassifikations- und Regressionsverfahren, das aus mehreren unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald (eng. Forest) eine Entscheidung treffen und die Klasse mit den meisten Stimmen entscheidet die endgültige Klassifikation. Random Forests können auch zur Regression eingesetzt werden.

Ein Random Forest weist gegenüber anderen Klassifikationsmethoden, wie einer Support Vector Machine (SVM), folgende signifikante Vorteile auf:

- Ein Klassifikator kann durch einen jeweils einfach aufgebauten Entscheidungsbaum sehr schnell trainiert werden, wobei die Trainingszeit linear mit der Anzahl der Bäume steigt.
- Eine Evaluierung von Testdaten kann auf getrennten Bäumen jeweils einzeln erfolgen und ist daher parallelisierbar. Er evaluiert also schnell.
- Durch Verwendung mehrerer Entscheidungsbäume (für Klassen, Trainingsbeispiele, Merkmale) sehr effizient für große Datenmengen.
- Wichtige Klassen können einfach erkannt werden und in Form eines oder mehrerer Parameter für die Wichtigkeit einer Klasse bestimmt werden.
- Der Zusammenhang zwischen Klassen kann einfach erkannt werden.

Es gibt viele verschiedene Varianten zum Trainieren und Klassifizieren eines Random Forest, wie zum Beispiel durch die Art der Entscheidungsbäume oder die Festlegung einer maximalen Tiefe der Bäume.

Es kann beispielsweise für jeden Entscheidungsbaum im Wald folgender Algorithmus angewandt werden:

- Von den n Beobachtungen in der Trainingsmenge werden n Stück zufällig mit Zurücklegen gezogen.
- Von den M Merkmalen (Features oder Dimensionen) der Trainingsdaten werden an jedem Knoten im Baum $m<<M$ Merkmale zufällig gewählt, die als Kriterium für den Schnitt (Split) infrage kommen sollen. Die anschließende Auswahl eines Merkmals aus dieser Menge kann zum Beispiel mittels der Minimierung der Entropie geschehen.
- Der Baum wird voll ausgebaut und nicht zurückgeschnitten (Pruning).

Zur Klassifikation einer Eingabe wird diese in jedem Baum ausgewertet. Diejenige Klasse, die am häufigsten gewählt wurde, ist die Ausgabe des Random Forest. Falls es mehrere Klassen gibt, die am häufigsten gewählt wurden, muss man sich für eine Klasse entscheiden.

Es können beispielsweise zusätzlich in jedem Blatt die A-posteriori-Wahrscheinlichkeiten der Klassen, mit denen sie das Blatt finden, gespeichert werden. Diese Wahrscheinlichkeiten werden anschließend bei der Klassifikation berücksichtigt, wodurch die Fehlerrate in ihrer Anwendung verringert werden kann.

In einer Weiterbildung der Erfindung wird die technische Eigenschaft von einem Ausgabemittel ausgegeben. Dadurch kann auf eine einfache Weise die gewonnene Information über die technische Eigenschaft beispielsweise visuell und/oder auditiv und/oder haptisch ausgegeben werden, ob beispielsweise Maßnahmen zur Verbesserung der technischen Eigenschaft günstig sind, oder ob Erfahrungen zur Fehlervermeidung vorhanden sind.

In einer Weiterbildung der Erfindung wird die technische Eigenschaft in der jeweiligen zumindest einen Analyse-Kategorie des Programmcodes dadurch gebildet, indem aus der zumindest einen Eigenschafts-Information die Metrik aus der jeweiligen zumindest einen Analyse-Kategorie angewandt wird und in weiterer Folge mit der zumindest einen Eigenschaft des zumindest einen Programmteils verglichen wird. Dadurch wird erreicht, dass die Metrik auf das Ergebnis der Suche, sowie auf den Programmteil selbst angewandt wird und somit ein Unterschied zwischen einer automatisch gefundenen Anmerkung eines Entwicklers in einer Datenbank und dem vorliegenden Programmteil bestimmt werden kann. Dadurch kann auf eine einfache und effiziente Weise der Programmcode die mittels maschinellen Lernens automatisch gefundene Anmerkung hinsichtlich der beispielsweise von einem Experten-Forum bezogene Information zur technischen Eigenschaft nutzen, um die technischen Eigenschaft des Programmcodes auf eine notwendige Qualität zu prüfen und insbesondere in weiterer Folge die Qualität des Programmcodes zu verbessern.

Es ist vorteilhaft, wenn die technische Eigenschaft die Ausführungsgeschwindigkeit, Stabilität des Programmcodes, Effizienz der Speichernutzung, Anzahl an Codezeilen des Programmcodes oder Kommunikationsparameter hinsichtlich der Effizienz einer Kommunikation mit einem weiteren Gerät oder einem weiteren Programmcode ist.

Es ist vorteilhaft, wenn die zumindest eine Analyse-Kategorie eine Fehlerbehandlung für den Programmcode, eine Verbesserung der Leistung des Programmcodes, eine Verbesserung der Benutzerfreundlichkeit des Programmcodes oder eine Verbesserung der Dokumentationsqualität des Programmcodes ist.

In einer Weiterbildung der Erfindung wird der Programmcode in einen ersten Programmteil und zumindest einen zweiten Programmteil unterteilt wird, und zumindest eine Analyse-Kategorie festgelegt wird, welche eine Analyse über die Wechselwirkung des ersten Programmteils mit dem zumindest einen zweiten Programmteil während der Ausführung des Programmcodes definiert. Dadurch wird erreicht, dass zwei oder mehrere Programmteile miteinander verglichen werden und eine technische Eigenschaft daraus abgeleitet wird. Folglich kann die Wechselbeziehung der Programmteile ermittelt, analysiert und verbessert werden.

In einer ersten Weiterbildung des Such-Modells der Erfindung wird ein erstes Teil-Such-Modell hinsichtlich der Meinungs-analyse-Daten, und/oder ein zweites Teil-Such-Modell hinsichtlich der Marktplatzanalyse-Daten, und/oder ein drittes Teil-Such-Modell hinsichtlich der API-Analyse-Daten für jeweils ein, auf dem Prinzip des maschinellen Lernens basierendes Such-Verfahren erzeugt und trainiert wird. Dann werden das erste Teil-Such-Modell und/oder das zweite Teil-Such-Modell und/oder das dritte Teil-Such-Modell miteinander verknüpft und bilden das Such-Modell.

In einer alternativen, zweiten Weiterbildung des Such-Modells der Erfindung sind die Meinungsanalyse-Daten und/oder die Marktplatzanalyse-Daten und/oder die API-Analyse-Daten von gemeinsamen Datenelementen des Such-Modell umfasst. Diese Variante entspricht einem "deep learning"-Modell für maschinelles Lernen.

In einer Weiterbildung der Erfindung erfolgt beim Ausführen des Such-Verfahrens eine Gruppierung der Eingabe-Daten, vorzugsweise in die Gruppen Skalierbarkeit, Anwendbarkeit und/oder Lesbarkeit.

In einer Weiterbildung der Erfindung ist der Programmcode ein Geräte-Treiber.

Die Aufgabe wird auch durch eine Vorrichtung eingangs genannter Art gelöst, indem ein Datenmodul zum Bereitstellen von Datenbank-Daten, ein Erfassungsmodul zum Bereitstellen von Eingabe-Daten, ein Analysemodul mit einem Meinungsanalyse-Modul und einem Marktplatzanalyse-Modul und einem API-Analyse-Modul zum Erzeugen und Trainieren eines Such-Modells für ein, auf dem Prinzip des maschinellen Lernens basierenden Such-Verfahren, und zum Ableiten zumindest einer Eigenschafts-Information aus dem Ergebnis der Suche, und ein Bewertungsmodul zum Ermitteln der technischen Eigenschaft aus der zumindest einen Eigenschafts-Information in Form von Bewertungs-Daten des zumindest einen Programmteils des Programmcodes, wobei die Vorrichtung dazu eingerichtet ist, das erfindungsgemäße Verfahren auszuführen.

Durch die Vorrichtung werden die im vorherstehen ausgeführten Verfahren genannten Vorteile erhalten.

Es ist vorteilhaft, wenn das Datenmodul dazu eingerichtet ist, nach Daten hinsichtlich zumindest einer vordefinierten Kategorie in einer Datenbank oder mittels eines Internet-Datendienstes automatisiert zu suchen und so gefundene Daten als Datenbank-Daten bereitzustellen.

Dadurch kann auf eine einfache Weise bei verschiedenen Datenquellen, wie Internet-Foren oder Publikations-Servern, nach für die Suche relevanten Informationen gesucht werden. Die gefundenen Informationen können dazu verwendet werden, um in weiterer Folge beispielsweise das Such-Modell mit aufbereiteten Daten zu trainieren. Es ist günstig, wenn die Suche in regelmäßigen zeitlichen Abständen wiederholt wird, um aktuelle Änderungen berücksichtigen zu können.

Ferner ist es vorteilhaft, wenn das Erfassungsmodul dazu eingerichtet ist, von dem Datenmodul Datenbank-Daten unter Verwendung der zumindest einen Analyse-Kategorie automatisiert zu durchsuchen und/oder abzurufen und als Eingabe-Daten auszugeben. Dadurch wird eine Aufbereitung der Daten erreicht, welche beispielsweise für das Trainieren des Such-Modells verwendet werden können.

Außerdem ist es günstig, wenn ferner ein Ausgabemodul zu Anzeige der ermittelten technischen Eigenschaft umfasst ist.

Die Erfindung bezieht sich auch auf ein Computerprogramm, welches direkt in einen Speicher der Suchvorrichtung der erfindungsgemäßen Vorrichtung ladbar ist, mit Programmcodemitteln, um die Schritte des erfindungsgemäßen Verfahrens auszuführen, wenn das Programm in der Vorrichtung ausgeführt wird.

Das erfindungsgemäße Computerprogramm implementiert das erfindungsgemäße Verfahren auf einer erfindungsgemäßen Vorrichtung, wenn es auf der Vorrichtung ausgeführt wird.

Dementsprechend gehört zur Erfindung außerdem ein Speichermedium mit darauf gespeicherten elektronisch lesbaren Steuerinformationen, welche zumindest ein erfindungsgemäßes Computerprogramm umfassen und derart ausgestaltet sind, dass sie bei Verwendung des Speichermediums in der erfindungsgemäßen Suchvorrichtung das erfindungsgemäße Verfahren durchführen.

Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Die Erfindung wird nachfolgend anhand eines in den beigeschlossenen Zeichnungen dargestellten Ausführungsbeispiels näher erläutert. In den Zeichnungen zeigt:

Fig. 1    eine schematische Darstellung eines ersten Ausführungsbeispiels einer erfindungsgemäßen Vorrichtung,

Fig. 2    eine schematische Darstellung eines zweiten Ausführungsbeispiels einer erfindungsgemäßen Vorrichtung

Fig. 3    ein Beispiel für ein Marktplatz-Domänen-Modell,

Fig. 4    ein Beispiel für eine API-Analyse, und

Fig. 5    ein Beispiel für eine Klassifizierung von Daten.

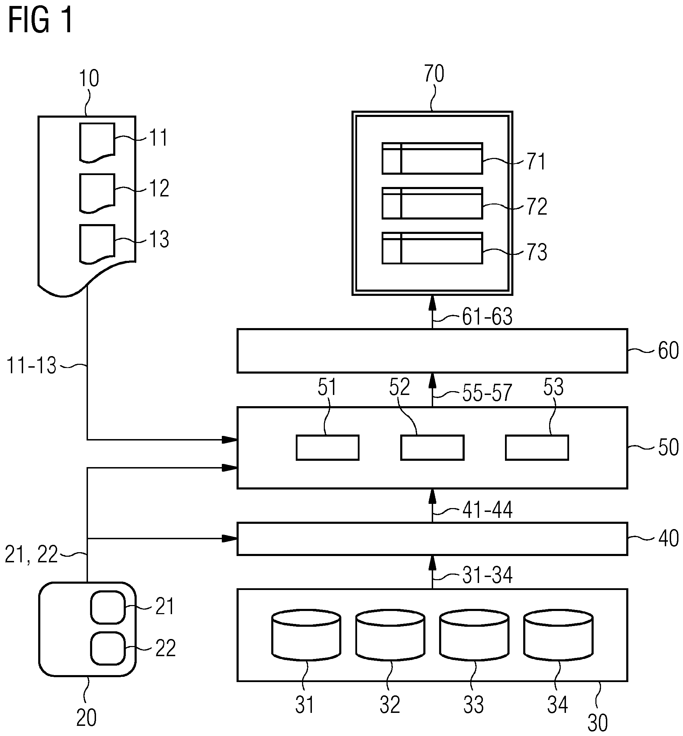

In Fig. 1 ist ein erstes Ausführungsbeispiel für eine erfindungsgemäße Vorrichtung zur Ermittlung einer technischen Eigenschaft eines Programmcodes 10 zur Ansteuerung eines elektronischen Geräts dargestellt, wobei vorzugsweise der Programmcode 10 ein Geräte-Treiber ist.

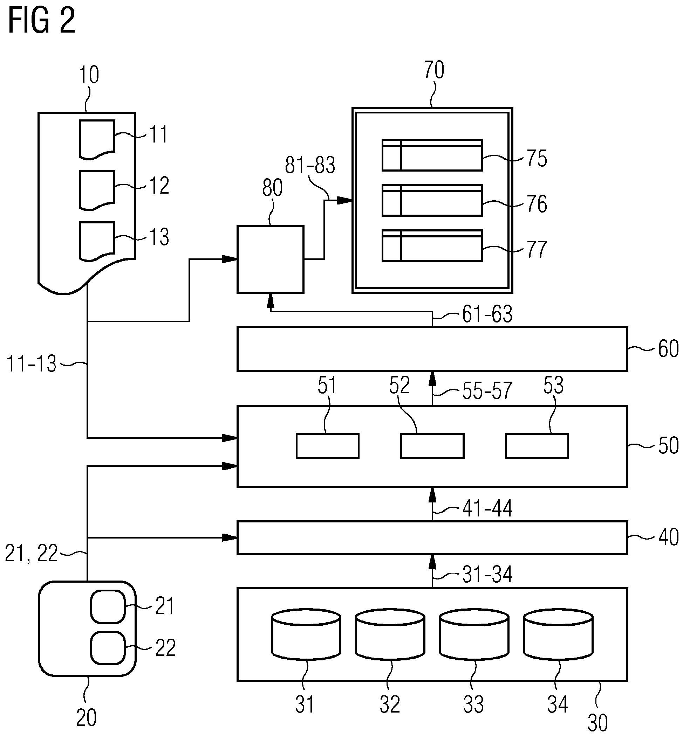

Fig. 2 zeigt ein zweites Ausführungsbeispiel für eine erfindungsgemäße Vorrichtung, welche sich in der Art der Ausgabe der technischen Eigenschaft des Programmcodes 10 unterscheidet.

Der Programmcode kann Steuerfunktionen für das elektronische Gerät aufweisen, welche sowohl zum Steuern, wie durch das Ansteuern eines Aktors, als auch zum Erfassen von Messgrößen vorgesehen sein können und mit weiteren Geräten verbunden sein können.

Elektronische Geräte, insbesondere industriell genutzte Produktionsvorrichtungen im weitesten Sinne, und/oder deren Funktionseinheiten können auch miteinander vernetzt werden. Beispiele für Geräte sind einzelne Produktionsanlagen, Produktionsmaschinen, Sensoren und Aktoren beziehungsweise Motoren. Bei den genannten Beispielen ergibt sich die Systematik, dass eine Produktionsmaschine jeweils zumindest einen Sensor und/oder zumindest einen Aktor beziehungsweise Motor aufweisen kann. Eine Produktionsanlage wiederum kann eine oder mehrere Produktionsmaschinen aufweisen. Es können beispielsweise Geräte unterschiedlicher Hierarchieebenen miteinander vernetzt werden. Wie im Beispiel genannt können dabei auch kleinste Einheiten der Produktionsanlagen, beispielsweise die Sensoren oder Aktoren beziehungsweise Motoren, als eigenständiger Teil mit dem Netzwerk verbunden werden. Dieses Prinzip wird auch als "Internet of Things", zu Deutsch "Internet der Dinge", bezeichnet. Im industriellen Maßstab wird dies auch als Industrie 4.0 bezeichnet, welche durch die feingliedrige und eigenständige Vernetzung einzelner Geräte ein besonders hohes Maß an Produktivität und Flexibilität ermöglicht.

Zur Steuerung und/oder Wartung derartiger Geräte, können wiederum unterschiedliche Funktionseinheiten vorgesehen sein. Dabei können Steuerfunktionen durch mehrere gleichartige und/oder verschiedenartige Funktionseinheiten im Zusammenspiel erbracht werden. Der Begriff Steuerfunktionen ist im vorliegenden Kontext breit zu verstehen und beinhaltet alle denkbaren Funktionen zum Steuern, Überwachen, Warten und/oder zum Sammeln von Daten. Mit anderen Worten kann durch ein Zusammenspiel der Funktionseinheiten die Steuerung, Überwachung, Wartung und/oder das Sammeln von Daten der Gerätschaften bereitgestellt sein. Selbstverständlich sind die Funktionseinheiten hierzu ebenfalls mit dem Gerät und untereinander vernetzt. Die Funktionseinheiten können über Schnittstellen miteinander kommunizieren, um die Steuerfunktion bereitzustellen. Die Kommunikation über die Schnittstellen erfolgt durch den Austausch von Steuersignalen.

Die erfindungsgemäße Vorrichtung weist ein Datenmodul 30 zum Bereitstellen von Datenbank-Daten 31-34 auf.

Dabei können die Datenbank-Daten beispielsweise von Diskussions-Foren, welche von Internet-Servern gehostet werden, oder andere Datenbanken, in welchen Informationen hinsichtlich Programmier-Erfahrungen von Programmiererinnen ausgetauscht werden können, abgerufen werden.

Die Programmier-Erfahrungen können technische Eigenschaften, wie die Ausführungsgeschwindigkeit oder Stabilität eines Anwendungsprogramms beziehungsweise Programmcodes, Effizienz einer Speichernutzung, Anzahl an Codezeilen eines Programmcodes oder Kommunikationsparameter hinsichtlich der Effizienz einer Kommunikation unter Geräten oder weiteren Programmcodes betreffen.

Ferner können die Programmier-Erfahrungen Fehlerbehandlung, Verbesserung der Leistung, eine Verbesserung der Benutzerfreundlichkeit oder eine Verbesserung der Dokumentationsqualität eines Programmcodes betreffen.

Beispiele für diese Datenbanken oder Foren sind die Plattform "Stackoverflow" oder "Github". Außerdem können Informationen von Markplätzen ("App-Stores") von Software-Ökosystemen abgerufen werden.

In diesem Ausführungsbeispiel ist das Datenmodul 30 dazu eingerichtet, nach Daten hinsichtlich zumindest einer vordefinierten Kategorie in einer Datenbank oder mittels eines Internet-Datendienstes automatisiert zu suchen und so gefundene Daten als Datenbank-Daten 31-34 bereitzustellen.

Die erfindungsgemäße Vorrichtung umfasst auch ein Erfassungsmodul 40 zum Bereitstellen von Eingabe-Daten 41-44.

In diesem Ausführungsbeispiel ist das Erfassungsmodul 50 dazu eingerichtet, von dem Datenmodul 30 Datenbank-Daten 31-34 unter Verwendung der zumindest einen Analyse-Kategorie 21, 22 automatisiert zu durchsuchen und/oder abzurufen und als Eingabe-Daten 41-44 auszugeben.

Die erfindungsgemäße Vorrichtung umfasst ferner ein Analyse-modul 50 zum Erzeugen und Trainieren eines Such-Modells.

Das Analysemodul 50 weist ein Meinungsanalyse-Modul 51, ein Marktplatz-Analyse-Modul 52 und ein API-Analyse-Modul 53 auf. Das Such-Modell ist für ein, auf dem Prinzip des maschinellen Lernens basierenden Such-Verfahren vorgesehen.

Das Analysemodul 50 ist dazu eingerichtet, aus dem Ergebnis der Suche zumindest eine Eigenschafts-Information 55-57 abzuleiten.

Die erfindungsgemäße Vorrichtung umfasst außerdem ein Bewertungsmodul 60 zum Ermitteln der technischen Eigenschaft, welche dazu eingerichtet ist, zumindest einen Eigenschafts-Information 55-57 des zumindest einen Programmteils 11-13 des Programmcodes 10 in Form von Bewertungs-Daten 61-63 zu ermitteln.

Die erfindungsgemäße Vorrichtung ist beispielsweise dazu eingerichtet, folgendes Verfahren zur Ermittlung einer technischen Eigenschaft des Programmcodes 10 zur Ansteuerung des elektronischen Geräts auszuführen.

Die technische Eigenschaft kann beispielsweise die Ausführungsgeschwindigkeit, die Stabilität des Programmcodes, die Effizienz der Speichernutzung, die Anzahl an Codezeilen des Programmcodes oder ein Kommunikationsparameter hinsichtlich der Effizienz einer Kommunikation mit anderen Geräten sein.

Zunächst wird der Programmcode 10 bereitgestellt und in drei Programmteile 11-13 unterteilt, sowie zwei Analyse-Kategorien 21, 22 festgelegt.

Natürlich ist es auch denkbar, dass der Programmcode 10 als Ganzes analysiert wird und folglich nur ein einziger Programmteil bestimmt wird, welcher dem Programmcode 10 entspricht.

Für die Analyse-Kategorie ist es möglich, dass nur eine Kategorie festgelegt wird, wenn nur ein Aspekt für den Programmcode bestimmt werden soll.

Die Analyse-Kategorien können dabei eine Fehlerbehandlung für den Programmcode 10-13, eine Verbesserung der Leistung des Programmcodes 10-13, eine Verbesserung der Benutzerfreundlichkeit des Programmcodes 10-13 oder eine Verbesserung der Dokumentationsqualität des Programmcodes 10-13 sein.

Es kann auch eine Analyse-Kategorie 21, 22 festgelegt werden, welche eine Analyse über die Wechselwirkung eines ersten Programmteils 11 mit einem zweiten Programmteil 12 oder 13 während der Ausführung des Programmcodes 10 definiert.

Für die Programmteile 11-13 wird mittels einer jeweiligen Metrik jeweils ein Parameter für die beiden Analyse-Kategorie 21, 22 abgeleitet.

Als Metrik kann beispielsweise die Anzahl an, in einem Internet-Forum gestellten, ähnlichen Fragen dienen oder wie oft ein Entwickler einen positiven, negativen oder neutralen Kommentar abgefasst hat.

Tabelle 1 beschreibt Beispiele für Metriken, welche bei der Verarbeitung von Daten, welche beispielsweise von einem Nutzer-Forum ermittelt und für ein Such-Modell verwendet werden können.

Tabelle 1: Beispiele für Metriken

| Metrik | Verfahren zur Bestimmung der Metrik |
| --- | --- |
| Anzahl an ähnlichen wiederkehrenden Anfragen | Informationsgewinnung durch Ähnlichkeits-Analyse |
| Benutzer-Meinung bzgl. API | Meinungs-Analyse mittels NLP |
| Antwortzeit | Vergleich der Zeitstempel der Antworten |
| Erfolgsquote (akzeptierte Antworten) | Von Plattform oder durch NLP bestimmt |
| Expertise des Beantwortenden | Von Plattform bestimmt |
| Expertise des Anfragenden | Von Plattform bestimmt |
| Komplexität der Frage | NLP und Bestimmung der Komplexität anhand eines Beispielcodes. |
| Komplexität der Antwort | NLP und Bestimmung der Komplexität anhand eines Beispielcodes. |
| Anzahl der nachfolgenden Fragen | NLP Klassifizierung der Fragen und Daten-Extraktion |
| Ähnlichkeit der Dokumentation bzgl. Fragen und Antworten | Informationsgewinnung durch Ähnlichkeits-Analyse |
| Einhaltung von Vokabular der Domäne | Informationsgewinnung durch Ähnlichkeits-Analyse |
| Konsistenz des Marktplatzes | NLP und Informationsgewinnung durch Ähnlichkeits-Analyse |

Beispielsweise ist die Konsistenz des Marktplatzes wichtig, um eine schlüssige und weiterführende Analyse für API-Nutzer zu ermöglichen. Dies erlaubt nicht nur eine engere Lernkurve in der Programmierung von API-Programmcodes, sondern trägt auch dazu bei, dass weitere API-Codes auf eine einfache Weise erstellt werden können.

Dies kann beispielsweise dadurch erfolgen, dass NLP zur Gewinnung von Quellcode-Funktionen mittels Eigennamenerkennung angewandt wird, oder auch indem Beziehungen zwischen dem Domänen-Modell und dem API festgelegt werden.

Eigennamenerkennung oder "Named-entity recognition" (NER) ist eine Aufgabe in der Informationsextraktion und bezeichnet die automatische Identifikation und Klassifikation von Eigennamen. Ein Eigenname ist eine Folge von Wörtern, die eine real existierende Entität beschreibt, wie z. B. ein Firmenname.

Im Verfahren wird anschließend ein Such-Modell hinsichtlich der beiden Analyse-Kategorien 21, 22 und des Parameters erzeugt und trainiert.

Für das Training können in einem ersten Schritt unstrukturierte Daten analysiert werden, wie beispielsweise Fragen und Antworten ("Q&A") oder Diskussionen in Internet-Foren, sowie mündliche und schriftliche Veröffentlichungen von Firmen. Dabei können für Audio- und Video-Publikationen Technologien zur Spracherkennung, wie "Natural Language Processing" (NLP), und Technologien zur Informationsgewinnung eingesetzt werden. Das Such-Modell ist für ein Such-Verfahren vorgesehen, welches auf dem Prinzip des maschinellen Lernens basiert.

Das Such-Modell weist Meinungsanalyse-Daten und/oder Marktplatzanalyse-Daten und/oder API-Analyse-Daten auf.

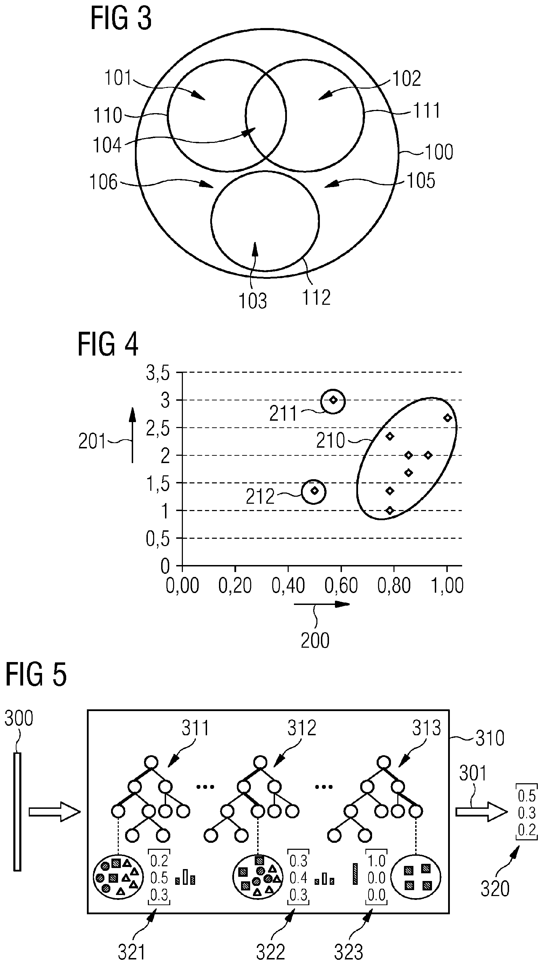

Fig. 3 zeigt ein einfaches Beispiel für ein Marktplatz-Domänen-Modell 100. Das Domänen-Modell kann entweder von einem bestehenden Domänen-Modell abgeleitet werden, oder mittels NLP und Informationsgewinnungs-Techniken ("Information Retrieval", IR) ähnlich zu jenen, welche auf die aktuelle API angewandt wurden, gewonnen werden. Innerhalb des Domänen-Modells werden die einzelnen APIs 110-112 auf unterschiedliche Konzepte, welche auf NLP oder IR basieren, abgebildet. Dadurch können Überlappungen oder Ähnlichkeiten gefunden werden, beispielsweise für Wartung 101, Sensor 102 und Leistungs-Analyse 103 ("key performance indicators", KPI). Eine Überlappung kann als Aktivposten 104 erfasst werden. Bereiche, welche sich gegenseitig annähern, können als Gebiet für weitere Optimierung 105 oder ergänzende Schätzung 106 erfasst werden.

Fig. 4 zeigt ein einfaches Beispiel für eine API-Analyse, in welchem Meinungen 200 mit Erfahrungen 201 in Verbindung gebracht werden, wobei drei Gruppierungen 210-212 erkennbar sind.

Der Wertebereich für die Meinung 200 ist so gewählt, dass ein hoher Wert für die Meinung 200 eine hohe Aussagekraft oder Bedeutsamkeit eines Kommentars in einem Forum repräsentiert. Die Meinung 200 kann beispielsweise durch die Akzeptanz eines Beitrags eines Forum-Teilnehmers durch andere Nutzer oder durch die breite Verwendung eines durch den Forum-Teilnehmer bereitgestellten Programmcodes durch andere Nutzer bestimmt werden.

Der Wertebereich für die Erfahrung 201 ist so gewählt, dass ein hoher Wert auf eine große Erfahrung hinweist. Die Erfahrung 201 kann beispielsweise durch die Anzahl an Diskussionsbeiträgen, dem Zeitraum an teilgenommenen Diskussionen oder auch an der Vielzahl an unterschiedlichen Themen von teilgenommenen Forum-Beiträgen eines Nutzers bemessen werden.

Die Gruppierung 210 weist auf ein "normales" Verhalten mit einer allgemein positiven Meinung von unerfahrenen oder mehr erfahrenen Benützern hin.

Die Gruppierung 211 weist auf einen Experten und die Gruppierung 212 auf einen unerfahrenen Benutzer hin, wobei die Meinung beziehungsweise Aussagekraft oder Bedeutsamkeit jeweils eher niedrig ist.

Im Verfahren wird anschließend für die Programmteile 11-13 eine Suche mithilfe des Such-Modells und Eingabe-Daten 41-44 ausgeführt.

Die Eingabe-Daten 41-44 werden, wie vorher beschrieben, durch das Erfassungsmodul 40 bereitgestellt.

Aus dem Ergebnis der Suche werden Eigenschafts-Informationen 55-57 abgeleitet, aus welchen die technische Eigenschaft der Programmteile 11-13 des Programmcodes 10 ermittelt wird.

Die technische Eigenschaft wird in der jeweiligen Analyse-Kategorie 21, 22 des Programmcodes 10 dadurch gebildet, indem die Metrik aus den jeweiligen Analyse-Kategorien 21, 22 auf die Eigenschafts-Informationen 55-57 angewandt wird und mit den Eigenschaften der Programmteile 11-13 verglichen wird.

Die gesuchte technische Eigenschaft wird vom Bewertungsmodul 60 in Form von Bewertungs-Daten 61-63 bereitgestellt.

Anschließend wird die technische Eigenschaft von einem Ausgabemittel 70 ausgegeben, beispielsweise visuell mittels einer Anzeige und/oder auditiv mittels eines Lautsprechers.

Das Ausführungsbeispiel in Fig. 1 zeigt ferner ein Ausgabemodul 70 zur Anzeige der ermittelten technischen Eigenschaft in Form von Ausgabe-Daten 71-73.

Fig. 2 zeigt das zweites Ausführungsbeispiel für eine erfindungsgemäße Vorrichtung zur Ermittlung einer technischen Eigenschaft eines Programmcodes 10 zur Ansteuerung eines elektronischen Geräts. Es gelten dazu die Ausführungen der Fig. 1.

Im Unterschied zur Fig. 1 wird in Fig. 2 die technische Eigenschaft in den jeweiligen beiden Analyse-Kategorie 21, 22 des Programmcodes 10 dadurch gebildet, indem auf die Eigenschafts-Informationen 55-57 die Metrik aus den zwei Analyse-Kategorie 21, 22 angewandt wird und in weiterer Folge das Ergebnis mit den Eigenschaften der Programmteile 11-13 verglichen wird. Somit kann eine relative Betrachtung der mittels der Suche gefundenen Eigenschafts-Informationen 55-57 mit den Eigenschaften der Programmteile 11-13 durch ein Vergleichsmodul 80 erfolgen, entsprechende Vergleichs-Daten 81-83 erzeugt und in Form von entsprechenden Ausgabe-Daten 75-77 auf dem Ausgabemodul 70 angezeigt werden.

Mit anderen Worten ist das Vergleichsmodul 80 dazu eingerichtet, die Metriken aus den zwei Analyse-Kategorie 21, 22 jeweils auf die Eigenschafts-Informationen 55-57, sowie auf die Eigenschaften der Programmteile 11-13 anzuwenden, einen Vergleich der jeweiligen Metriken durchzuführen, die Unterschiede in den jeweiligen Metriken zu bestimmen und in Form von Vergleichs-Daten 81-83 auszugeben.

Beim Ausführen des Such-Verfahrens erfolgt eine Klassifizierung und Gruppierung der Eingabe-Daten, beispielsweise in die Gruppen Skalierbarkeit, Anwendbarkeit und/oder Lesbarkeit erfolgen.

Klassifizierung nennt man allgemein das Zusammenfassen von Objekten zu Klassen (Mengen).

Eine Klassifizierung erfordert entweder die Abstraktion oder aber die Bildung einer mehrschichtigen Struktur in Form eines Komplexes.

Klassifizierung steht für die bewusst geplante Ordnung von Wissen im Rahmen einer konkreten Betrachtung nach objektivierbaren, einheitlichen Kriterien. Da erst die Klassifizierung realer Informationen eine geordnete Verarbeitung ermöglicht, ist die Klassifizierung ebenso zentraler Bestandteil vieler Anwendungen der Informatik, wie beispielsweise in der Mustererkennung.

Bei einer Klassifizierung kann es durch Fehler in der Vorgehensweise und/oder Eigenheiten der einzuordnenden Objekte zu Fehlentscheidungen, sogenannte Fehl- oder Falschklassifikationen, kommen. Es ist günstig zu einer Entscheidung eine Angabe über ihre Zuverlässigkeit beizufügen.

Als Cluster hingegen bezeichnet man in der Informatik und Statistik eine Gruppe von Datenobjekten mit ähnlichen Eigenschaften. Die Menge der in einem Datensatz gefundenen Cluster bezeichnet man als Gruppierung oder Clustering, Verfahren zur Berechnung einer solchen Gruppierung als Clusteranalyse. Nicht zu einem Cluster gehörende Datenobjekte bezeichnet man als Ausreißer, Outlier oder Noise.

Die Kernidee einer Gruppe oder eines Clusters ist, dass Objekte im selben Cluster über "ähnliche" Eigenschaften verfügen und sich von Objekten, die nicht im selben Cluster sind, dadurch unterscheiden.

Bereits bei der Clusterzugehörigkeit gibt es unterschiedliche Formulierungen:

- Bei einem harten Clustering gehört jedes Datenobjekt ganz oder gar nicht zu einem Cluster.
- Bei einem weichen Clustering gehört jedes Datenobjekt zu einem gewissen Anteil zu einem Cluster.

Des Weiteren kann man unterscheiden:

- Bei einem strikt partitionierenden Clustering gehört jedes Datenobjekt zu genau einem Cluster.
- Bei einem strikt partitionierenden Clustering mit Ausreißern kann ein Datenobjekt auch zu keinem Cluster gehören (bei einem weichen Clustering dürfen sich die Anteile auch zu weniger als Eins summieren).
- Bei einem überlappenden Clustering kann ein Objekt echt zu mehreren Clustern gehören (bei einem weichen Clustering dürfen sich die Anteile auch zu mehr als Eins summieren) .

Auch innerhalb von Clustern bzw. Gruppen kann es Untergruppen geben, die einander ähnlicher sind als dem Rest der größeren Gruppe. Hat man eine derartige Struktur, so spricht man von hierarchischen Clustern bzw. einem hierarchischen Clustering. Verfahren zur Identifikation hierarchischer Cluster sind beispielsweise hierarchische Clusteranalyse, OPTICS und BIRCH.

Für die Gruppierung werden bevorzugt Algorithmen zum unüberwachtes Lernen, insbesondere der k-means-Algorithmus, eingesetzt. Der k-Means-Algorithmus ist ein Verfahren zur Vektorquantisierung, das auch zur Clusteranalyse verwendet wird. Dabei wird aus einer Menge von ähnlichen Objekten eine vorher bekannte Anzahl von k Gruppen gebildet. Der Algorithmus ist eine häufig verwendete Technik zur Gruppierung von Objekten, da er schnell die Zentren der Cluster findet. Dabei bevorzugt der Algorithmus Gruppen mit geringer Varianz, und ähnlicher Größe.

Jede Gruppe wird mit einem Parameter, einem nichtfunktionalen Erfordernis ("non-functional requirement", NFR) versehen, beispielsweise Skalierbarkeit, Anwendbarkeit und/oder Lesbarkeit. Ferner wird eine Klasse zugeordnet, sowie eine Markierung ("label"), beispielsweise "nicht-korrekte Verwendung der API" (Klasse C1), "falsche Fehlerbehandlung durch unerfahrenen Benutzer" (Klasse C2) oder "unerwartetes Verhalten eines erfahrenen Benutzers erkannt" (Klasse C3). Tabelle 2 beschreibt Beispiele für NFRs, welche zur Bildung von Gruppen verwendet werden können, wobei die NFRs unter Einbeziehung der Eigenschaften des elektronischen Geräts, welches mit dem Programmcode angesteuert wird, ermittelt werden können. Somit umfasst die technische Eigenschaft nicht nur die Eigenschaft des Programmcodes alleine, sondern die gemeinsame Eigenschaft des Programmcodes und des elektronischen Geräts.

Tabelle 2: Beispiele für nicht-funktionale Anforderungen

| NFR Kategorie | Eigenschafts-Kategorie | Beispiel |
|---|---|---|
| Benutzerfreundlichkeit | Funktionen und Formate | Das Zeitformat ist für die Funktion X nicht geeignet. |
| Lesbarkeit | Namen und Kodierungs-Konventionen | Der Parameter Y ist unklar. |
| Ausfallsicherheit | Verhalten des Programmcodes/ Programmteils in der Ausführung | Es wird ein Fehler (z.B. mit Fehlercode Z) erwartet. |

(fortgesetzt)

| NFR Kategorie | Eigenschafts-Kategorie | Beispiel |
|---|---|---|
| Skalierbarkeit | Verhalten des Programmcodes/ Programmteils in der Ausführung mit mehreren Anfragen | Die Ausführungsgeschwindigkeit wird voraussichtlich ab 30 Anfragen pro Minute stark sinken. |
| Leistungsparameter | Antwortzeit des Programmcodes/ Programmteils in der Ausführung | Die Antwortzeit für eine Anfrage wird unter 100 ms liegen. |
| Verfügbarkeit | Verfügbarkeit oder Ausfallzeit | Die API wird zu 95 % der Zeit verfügbar sein. |
| Dokumentation | Qualität der Dokumentation innerhalb des Programmcodes | Die Beschreibung des Programmteils ist zu gering/ kurz. |

Zusätzlich erfolgt beim Training und bei der Suche eine Klassifizierung, beispielsweise unter Verwendung von überwachten Lernverfahren wie beispielsweise Random Forest, neuronale Netze oder Support Vector Machines, um eine Vorhersage treffen zu können.

Die technische Eigenschaft kann auch mittels einer Schätzung bestimmt werden. Beispielsweise kann das Such-Modell KlassenWahrscheinlichkeiten bestimmen, beispielsweise 50% für die Klasse C1, 30% für die Klasse C2 oder 20% für die Klasse C3.

Fig. 5 zeigt ein Beispiel für eine Klassifizierung von Daten 300, welche durch einen Wald 310 (Random-Forest Modell) mit Bäumen 311-313 dargestellt werden können. Es sind die Klassenwahrscheinlichkeiten der Bäume 311-313 in Form von Vektoren 321-323 erkennbar. Es kann über eine Durchschnittsberechnung 301 ein Klassenvektor 320 gebildet werden, welcher die vorher genannten Klassen C1, C2 und C3 umfasst.

Das Such-Modell kann beispielsweise ein erstes Teil-Such-Modell hinsichtlich der Meinungsanalyse-Daten, und/oder ein zweites Teil-Such-Modell hinsichtlich der Marktplatzanalyse-Daten, und/oder ein drittes Teil-Such-Modell hinsichtlich der API-Analyse-Daten umfassen.

Jedes dieser drei Teil-Such-Modelle kann für jeweils ein, auf dem Prinzip des maschinellen Lernens basierendes Such-Verfahren erzeugt und trainiert werden.

Das erste Teil-Such-Modell und/oder das zweite Teil-Such-Modell und/oder das dritte Teil-Such-Modell können anschließend mittels dem übergeordneten "Gesamt-" Such-Modell, beispielsweise über einen Klassenvektor, miteinander verknüpft werden.

Alternativ dazu kann das Such-Modell beispielsweise die Meinungsanalyse-Daten und/oder die Marktplatzanalyse-Daten und/oder die API-Analyse-Daten innerhalb von gemeinsamen Datenelementen des Such-Modells, aus dem Gebiet des "deep learning" bekannten sogenannten "Neuronen" speichern.

Deep Learning bezeichnet eine Klasse von Optimierungsmethoden künstlicher neuronaler Netze, die zahlreiche Zwischenlagen (englisch hidden layers) zwischen Eingabeschicht und Ausgabeschicht haben und dadurch eine umfangreiche innere Struktur aufweisen. In Erweiterungen der Lernalgorithmen für Netzstrukturen mit sehr wenigen oder keinen Zwischenlagen, wie beim einlagigen Perzeptron, ermöglichen die Methoden des Deep Learnings auch bei zahlreichen Zwischenlagen einen stabilen Lernerfolg.

Eine Schätzung kann mittels einer Kaskadierung einzelner Such-Modelle gebildet werden:

$$TE = \text{Schätzung}(M1) \otimes \text{Schätzung}(M2.1) \otimes \text{Schätzung}(M2.2)$$

wobei

*TE*    die technische Eigenschaft,

*M1*    das Teil-Such-Modell 1,

*M2.1*    das Teil-Such-Modell 2.1, und

*M2.2*    das Teil-Such-Modell 2.2

ist.

Beispiele für Elemente einer verknüpften bzw. kaskadierten Schätzung sind in Tabelle 3 gezeigt.

Tabelle 3: Beispiel für eine kaskadierte Schätzung

| Konzept | Beschreibung |
|---|---|
| TE | Verursacht die Verwendung der Schnittstelle wenige Fehler bei der Kompilierung? |
| Schätzung($M$1) | Schätze die Anzahl der Kompilierungsfehler bei der Verwendung der Schnittstelle basierend auf ähnlichen Schnittstellen |
| Schätzung ($M$2.1) | Schätze die Kompilierungsfehler von anderen ähnlichen Schnittstellen in Verbindung mit weiteren technischen Eigenschaften (z. B. Anzahl der Parameter eines Methodenaufrufes) und der Schätzung M1 |
| Schätzung ($M$2.2) | Schätze die wahrscheinlichsten Maßnahmen für den Entwickler der Schnittstelle zur Minimierung der Kompilierungsfehler bei der Verwendung der Schnittstelle des ausgeführten Programmcodes auf Basis einer Datenbank mit Maßnahmen und der Schätzung M2.1 |
| $\otimes$ | Regel-basierte Verknüpfung der jeweiligen Schätzungen |

**Bezugszeichenliste:**

| | |
|---|---|
| 10 | Programmcode |
| 11-13 | Programmteil |
| 20 | Analyse-Daten |
| 21, 22 | Analyse-Kategorie |
| 30 | Datenmodul |
| 31-34 | Datenbank-Daten |
| 40 | Erfassungsmodul |
| 41-44 | Eingabe-Daten |
| 50 | Analysemodul |
| 51 | Meinungsanalyse-Modul |
| 52 | Marktplatzanalyse-Modul |
| 53 | API-Analyse-Modul |
| 55-57 | Eigenschafts-Information |
| 60 | Bewertungsmodul |
| 61-63 | Bewertungs-Daten |
| 70 | Ausgabemodul |
| 71-73, 75-77 | Ausgabe-Daten |
| 80 | Vergleichsmodul |
| 81-83 | Vergleichs-Daten |
| 100 | Marktplatz-Domänen-Modell |
| 101 | Wartung |
| 102 | Sensor |
| 103 | Leistungs-Analyse |
| 104 | Aktivposten |
| 105 | Optimierung |
| 106 | Schätzung |
| 110-112 | API |
| 200 | Meinung |
| 201 | Erfahrung |
| 210-212 | API-Gruppierung |
| 300 | Wald |
| 301-303 | Baum |
| 310 | Daten |
| 311 | Durchschnittsberechnung |
| 320-323 | Vektor |

**Patentansprüche**

1. Verfahren zur Ermittlung einer technischen Eigenschaft eines Programmcodes (10) zur Ansteuerung eines elektronischen Geräts,
wobei der Programmcode (10) bereitgestellt und in zumindest einen Programmteil (11-13) unterteilt und zumindest eine Analyse-Kategorie (21, 22) festgelegt wird,
und für den zumindest einen Programmteil (11-13) mittels einer Metrik zumindest ein Parameter für die zumindest eine Analyse-Kategorie (21, 22) abgeleitet wird,
und ein Such-Modell hinsichtlich der zumindest einen Analyse-Kategorie (21, 22) und des zumindest einen Parameters für ein, auf dem Prinzip des maschinellen Lernens basierendes Such-Verfahren erzeugt und trainiert wird, wobei das Such-Modell Meinungsanalyse-Daten und/oder Marktplatzanalyse-Daten und/oder API-Analyse-Daten aufweist,
und für den zumindest einen Programmteil (11-13) eine Suche mithilfe des Such-Modells und bereitgestellter Eingabe-Daten (41-44) ausgeführt wird und aus dem Ergebnis der Suche zumindest eine Eigenschafts-Information (55-57) abgeleitet wird, aus welcher die technische Eigenschaft in Form von Bewertungs-Daten (61-63) des zumindest einen Programmteils (11-13) des Programmcodes (10) ermittelt wird.

2. Verfahren nach dem vorhergehenden Anspruch, wobei die technische Eigenschaft von einem Ausgabemittel (70) ausgegeben wird.

3. Verfahren nach einem der vorhergehenden Ansprüche, wobei die technische Eigenschaft in der jeweiligen zumindest einen Analyse-Kategorie (21, 22) des Programmcodes (10) dadurch gebildet wird, indem auf die zumindest eine Eigenschafts-Information (55-57) die Metrik aus der jeweiligen zumindest einen Analyse-Kategorie (21, 22) angewandt wird und in weiterer Folge mit der zumindest einen Eigenschaft des zumindest einen Programmteils (11-13) verglichen wird.

4. Verfahren nach einem der vorhergehenden Ansprüche, wobei die technische Eigenschaft die Ausführungsgeschwindigkeit, Stabilität des Programmcodes, Effizienz der Speichernutzung, Anzahl an Codezeilen des Programmcodes oder Kommunikationsparameter hinsichtlich der Effizienz einer Kommunikation mit einem weiteren Gerät oder einem weiteren Programmcode ist.

5. Verfahren nach einem der vorhergehenden Ansprüche, wobei die zumindest eine Analyse-Kategorie eine Fehlerbehandlung für den Programmcode, eine Verbesserung der Leistung des Programmcodes, eine Verbesserung der Benutzerfreundlichkeit des Programmcodes oder eine Verbesserung der Dokumentationsqualität des Programmcodes ist.

6. Verfahren nach einem der vorhergehenden Ansprüche, wobei der Programmcode (10) in einen ersten Programmteil (11) und zumindest einen zweiten Programmteil (12, 13) unterteilt wird, und zumindest eine Analyse-Kategorie (21, 22) festgelegt wird, welche eine Analyse über die Wechselwirkung des ersten Programmteils (11) mit dem zumindest einen zweiten Programmteil (12, 13) während der Ausführung des Programmcodes (10) definiert.

7. Verfahren nach einem der vorhergehenden Ansprüche, wobei ein erstes Teil-Such-Modell hinsichtlich der Meinungsanalyse-Daten, und/oder ein zweites Teil-Such-Modell hinsichtlich der Marktplatzanalyse-Daten, und/oder ein drittes Teil-Such-Modell hinsichtlich der API-Analyse-Daten für jeweils ein, auf dem Prinzip des maschinellen Lernens basierendes Such-Verfahren erzeugt und trainiert wird, und das erste Teil-Such-Modell und/oder das zweite Teil-Such-Modell und/oder das dritte Teil-Such-Modell mittels dem Such-Modell miteinander verknüpft werden.

8. Verfahren nach einem der Ansprüche 1 bis 6, wobei die Meinungsanalyse-Daten und/oder die Marktplatzanalyse-Daten und/oder die API-Analyse-Daten von gemeinsamen Datenelementen des Such-Modell umfasst sind.

9. Verfahren nach einem der vorhergehenden Ansprüche, wobei der Programmcode (10) ein Geräte-Treiber ist.

10. Vorrichtung zur Ermittlung einer technischen Eigenschaft eines Programmcodes (10) zur Ansteuerung eines elektronischen Geräts, wobei ein Datenmodul (30) zum Bereitstellen von Datenbank-Daten (31-34), ein Erfassungsmodul (40) zum Bereitstellen von Eingabe-Daten (41-44), ein Analysemodul (50) mit einem Meinungsanalyse-Modul (51) und einem Marktplatzanalyse-Modul (52) und einem API-Analyse-Modul (53) zum Erzeugen und Trainieren eines Such-Modells für ein, auf dem Prinzip des maschinellen Lernens basierenden Such-Verfahren, und zum Ableiten zumindest einer Eigenschafts-Information (55-57) aus dem Ergebnis der Suche, und ein Bewertungsmodul (60) zum Ermitteln der technischen Eigenschaft aus der zumindest einen Eigenschafts-Information (55-57) in Form von Bewertungs-Daten (61-63) des zumindest einen Programmteils (11-13) des Programmcodes (10), wobei die Vorrichtung dazu eingerichtet ist, das Verfahren nach einem der vorhergehenden Ansprüche auszuführen.

11. Vorrichtung nach dem vorhergehenden Anspruch, wobei das Datenmodul (30) dazu eingerichtet ist, nach Daten hinsichtlich zumindest einer vordefinierten Kategorie in einer Datenbank oder mittels eines Internet-Datendienstes automatisiert zu suchen und so gefundene Daten als Datenbank-Daten (31-34) bereitzustellen.

12. Vorrichtung nach einem der Ansprüche 10 oder 11, wobei das Erfassungsmodul (50) dazu eingerichtet ist, von dem Datenmodul (30) Datenbank-Daten (31-34) unter Verwendung der zumindest einen Analyse-Kategorie (21, 22) automatisiert zu durchsuchen und/oder abzurufen und als Eingabe-Daten (41-44) auszugeben.

13. Vorrichtung nach einem der Ansprüche 10 bis 12, wobei ferner ein Ausgabemodul (70) zu Anzeige der ermittelten technischen Eigenschaft umfasst.

14. Computerprogramm, welches direkt in einen Speicher einer Vorrichtung nach einem der Ansprüche 10 bis 13 ladbar ist, mit Programmcodemitteln, um die Schritte des Verfahrens nach einem der Ansprüche 1 bis 9 auszuführen, wenn das Computerprogramm in der Vorrichtung ausgeführt wird.

15. Speichermedium mit darauf gespeicherten elektronisch lesbaren Steuerinformationen, welche zumindest ein erfindungsgemäßes Computerprogramm nach Anspruch 14 umfassen und derart ausgestaltet sind, dass sie bei Verwendung des Speichermediums in einer Vorrichtung nach einem der Ansprüche 10 bis 14 ein Verfahren nach einem der Ansprüche 1 bis 9 durchführen.

## FIG 1

# FIG 2

FIG 3

FIG 4

FIG 5

**Europäisches Patentamt**
**European Patent Office**
**Office européen des brevets**

# EUROPÄISCHER RECHERCHENBERICHT

Nummer der Anmeldung

EP 18 20 4240

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DIEGO GÜEMES-PEÑA ET AL: "Emerging topics in mining software repositories : Machine learning in software repositories and datasets", PROGRESS IN ARTIFICIAL INTELLIGENCE, Bd. 7, Nr. 3, 28. März 2018 (2018-03-28), Seiten 237-247, XP055545760, ISSN: 2192-6352, DOI: 10.1007/s13748-018-0147-7 * das ganze Dokument * ----- | 1-15 | INV. G06Q10/06 |
| X | ISSA ATOUM ET AL: "Mining Software Quality from Software Reviews: Research Trends and Open Issues", INTERNATIONAL JOURNAL OF COMPUTER TRENDS AND TECHNOLOGY, Bd. 31, Nr. 2, 25. Januar 2016 (2016-01-25), Seiten 74-83, XP055545765, DOI: 10.14445/22312803/IJCTT-V31P114 * das ganze Dokument * ----- | 1-15 | |
| | | | RECHERCHIERTE SACHGEBIETE (IPC) |
| | | | G06Q |

Der vorliegende Recherchenbericht wurde für alle Patentansprüche erstellt

| Recherchenort | Abschlußdatum der Recherche | Prüfer |
|---|---|---|
| München | 22. Januar 2019 | Moser, Raimund |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)